# EUROPEAN PATENT SPECIFICATION

(11) **EP 0 594 651 B1**
(45) Date of publication and mention of the grant of the patent: **08.01.1997**
(21) Application number: 92913668.7
(22) Date of filing: 30.06.1992
(51) Int. Cl.: A01N 1/02

(54) **DRIED BLOOD CELLS AND METHOD OF PREPARATION**
Entwässerte Blutzellen und Verfahren zur Herstellung
DESHYDRATATION DE CELLULES SANGUINES ET PROCEDE DE PREPARATION

(30) Priority: 01.07.1991 GB 9114202
(43) Date of publication of application: 04.05.1994
(73) Proprietor: QUADRANT HOLDINGS CAMBRIDGE LIMITED, Trumpington, Cambridge CB2 2SY (GB)
(72) Inventor: ASPINALL, Richard, Trumpington, Cambridgeshire CB2 2NB (GB); ROSER, Bruce Joseph, Balsham, Cambridgeshire (GB)
(74) Representative: Ablewhite, Alan James
(86) International application number: GB9201183
(87) International publication number: WO9300806

(56) References cited:
- EP-A- 0 246 824
- EP-A- 0 312 114
- Week 9212, Derwent Publications Ltd., London, GB, AN 92-096488

## Description

This invention relates to a process for the preservation of blood cells in the dried state such that they are stable to storage over long periods of time and which, when reconstituted, give biologically active cells.

Blood consists of an amber liquid termed plasma in which is suspended a number of formed elements - erythrocytes, leukocytes and platelets. In mammals the erythrocytes (red blood cells) have no nuclei and in humans they are biconcave discs of approximately 8µm diameter. They are produced continuously in the bone marrow and released in the circulation where they persist and function for a finite time (approximately 120 days in man) before being destroyed in the spleen. The major function of erythrocytes is to transport oxygen from the lungs to the tissues and transport carbon dioxide in the reverse direction, and this function is a product of the protein haemoglobin present in the cell. In combination with oxygen, haemoglobin forms oxyhaemoglobin, and in combination with carbon dioxide it forms carbaminohaemoglobin.

The haemoglobin is contained within the cell by an elastic membrane composed of carbohydrates, lipids and proteins. The membrane acts as a selectively permeable barrier maintaining differences in the concentrations of sodium and potassium ions between the interior of the cell and the plasma, and also contains several active transport systems.

Platelets are small detached cell fragments or "minicells" derived from much larger cells called megakaryocytes. The megakaryocytes are produced in the bone marrow and remain there, the platelets starting their existence as vesicles within a megakaryocyte, before detaching themselves from its outer regions. The platelets are released into the circulation at the rate of approximately 35 x 10⁹ per day and having a lifespan of 9-10 days in the circulation. Platelets act to maintain the vascular integrity by sealing minor deficiencies in the endothelium, and promote vascular healing by the release of specific growth factor.

The plasma is a sticky, pale amber liquid which is a solution in water of proteins, salt and glucose, together with a variety of substances in transit. The proteins include albumin, which maintains the osmotic pressure of blood (although the other proteins also contribute to this), coagulation factors which are responsible for maintaining the integrity of the vascular system, and the globulins which have a number of functions, including the carrying of immunity to infectious disease (the gamma-globulins).

The current practice for the collection and storage of blood requires that the blood is collected from healthy volunteers in FDA approved collection bags which contain a pre-measured amount of anticoagulant. These standard collection bags are designed to receive 450ml of blood ± 10% and, provided that the sterility is maintained, the storage of the blood is limited only by the viability and stability of the individual components, which is determined by factors such as the temperature of storage and the anticoagulant used.

Both erythrocytes and platelets are essential to normal well-being and there are a number of conditions resulting from injury, medical procedure or biochemical lesion which as a consequence lead to reductions in the levels of platelets or erythrocytes in the circulation. Such deficiencies must be corrected by transfusion. The transfusion of whole blood is justified only in rare cases following massive haemorrhage when both red blood cells and volume need to be replaced. It is more likely that a patient requires a specific fraction of blood to correct a particular disorder. Erythrocytes or plasma reduced blood is more suitable for correcting anaemia occuring pre- and post-operatively. Platelets are recommmended for patients with thrombocytopenia or an abnormality of platelet function or both, which is resulting in significant bleeding.

Whole blood stored under refrigeration using ACD (Acid-Citrate-Dextrose) is only available for transfusion for up to 21 days after collection. This expiry time corresponds to the time the when 70% of these cells are still detectable in the circulation 24 hours after infusion. The use of CPD (Citrate-Phosphate-Dextrose) as an anticoagulant extends this "shelf life" to 28 days and with the addition of adenine to this anticoagulant, the life can be extended to 35-42 days.

Blood products stored below 0°C have a much longer shelf life but the conditions of storage are stringent. The length of permissible storage of blood products in the frozen state depends on factors such as the temperature of storage and the concentration of different additives within the preservation mixture.

Red blood cells suspended in a cryopreservative containing approximately 20% glycerol can be stored in liquid nitrogen for at least 3 years. Red cells suspended in a cryopreservative containing a higher concentration of glycerol (approximately 40%) can be stored at -65°C or lower for up to 15 years. As with refrigerated blood, freezers or liquid nitrogen containers have to be monitored continually to detect any increase in temperature, and must have the appropriate alarm system attached. Prior to transfusion, frozen red blood cells must be thawed, deglycerolised and then used within 48 hours.

Cold storage of blood and blood products, either at low temperatures in a liquid form, or at extremely low temperatures in the presence of a cryoprotectant has been the most favoured method of storage of blood since the First World War. The drawbacks with this method of storage, which until now have been insuperable, are obvious and are in the main related to the cost of the operation. Storage of blood for any length of time is at the present time geographically controlled by the presence of a power source to generate electricity to run the refrigerators, or by the availability of liquid nitrogen. Furthermore, centres of blood storage require expensive equipment (special refrigerators, pre-set alarms) for maintaining the blood in an optimum condition, and specially trained staff to manage these stocks to ensure their correct storage, rotation and use, and the maintenance of adequate supplies. Clearly, in many of the poorer parts of the world, such complex and expensive storage facilities are simply not a viable option.

It would clearly be highly desirable to be able to store blood products in a form that was stable for long periods and did not need expensive and complex storage facilities. One option that has been explored extensively in the last few years is the possibility of desiccating blood products to give a dried form that would be stable for long periods at ambient temperature, and which could then be reconstituted by a simple rehydration procedure to give viable blood products that can then be used for diagnostic and therapeutic purposes. A number of recent patent applications, e.g. EP 0 367 468 and WO 90/04329, have described processes for the desiccation of mammalian cells to give dried products that on reconstitution are able to show much of their original antigenic activity. However, none of these desiccation processes have allowed the production of dried cell products that can be reconstituted to give viable, biologically active cells, and hence such products are wholly unsuitable for transfusion processes. Another application (EP 0 365 257) does actually claim a process for the freeze-drying (lyophilising) of mammalian cells in the presence of a variety of monosaccharides, to give desiccated cells that can be reconstituted to give a small percentage of viable cells. This patent (EP 0 356 257) shows no Examples of the preservation of surface antigenicity, neither does if describe any long term storage experiments. Inability to fulfill both criteria would make such blood products unsuitable for therapeutic use.

Thus it can clearly be seen that there is still an urgent need for a method of production of dried blood products in a form stable over long periods, that do not require expensive storage facilities, and which can be reconstituted by a simple rehydration procedure to give suspensions for transfusion containing a high percentage of viable cells i.e. a percentage of cells within the limits normally tolerated by the body. It is the object of this invention to provide such a method.

We have found that it is possible to dry blood cells in such a way as to produce dried cell products that can be stored for long periods at ambient temperature, and which on rehydration give aqueous suspensions in which a high percentage of the reconstituted cells are intact and still in possession of their original biological activity i.e. they are able to perform their normal biological functions. Hence, these reconstituted blood products may be utilised in a wide range of diagnostic and therapeutic applications.

It is known that in order to cope with cycling water stress a phylogenetically diverse group of organisms (bacteria, unicellular algae, vascular plants, invertebrates and some vertebrates) utilise a group of low molecular weight organic molecules (polyhydric alcohols, polyols, amino acids and amino acid derivatives) as organic osmolytes. The external environments which confront the cells of these organisms may change in terms of their water availability, and this in turn can lead to damage to macromolecules within the cells. In order to protect these macromolecules the cells accumulate intracellularly one or more organic osmolytes which balance the osmotic strength of the cytoplasm with that of the environment (see, for example, Le Rudulier et al, Science, 224, 1064-1068, 1984). It is wholly surprising and quite without precedent, however, that incubation of cells in solutions of such osmolytes should enable one to dry biologically active cells, which can then be stored for long periods at ambient temperature before rehydrating to give a high percentage of reconstituted cells that retain their original biological activity.

According to this invention we provide a method of drying blood cells for rehydration, characterised in that the cells to be dried are incubated in an aqueous system containing one or more organic osmolytes before drying.

In general, the blood cells are incubated in an aqueous solution containing one or more organic osmolytes at ambient temperature or above, the organic osmolyte(s) being present in any effective amount. Generally a concentration of the organic osmolyte(s) in the final incubation mixture of from 2 to 25% (w/v) is desirable, typically 10 to 20% e.g. 15%. The organic osmolytes are chosen from a group of low molecular weight organic molecules (e.g. molecular weights from about 80 to 180), that includes amino acids and amino acid derivatives. Preferred osmolytes are those represented by the formula 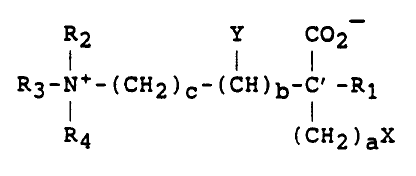 where a, b and c are each integers from 0 to 4; X is H, alkyl, or NH₂; Y is H, alkyl, or OH; R₁ and R₂ are each H or alkyl, or R₁ and R₂ together with N⁺ and C' form a heterocyclic ring, e. g. a pyrrolidine ring; and R₃ and R₄ are each H or alkyl. All alkyl groups in the above formula are lower alkyls i.e. C₁ - C₄. Among these preferred osmolytes, carnitine, proline, and betaine are particularly preferred. After drying, the blood product can be stored dry at ambient temperature, with no significant deterioration over time.

Apart from the haemoglobin inside the erythrocyte, it is important for full effective functionality that the proteins and glycoproteins of the lipid membrane should also be preserved as some of these ensure the erythrocytes remain within the correct circulartory pathways for their normal lifespan. Thus, for clinical use, especially where a reasonably long half life is expected for the blood cells, it is necessary to preserve the components of the lipid membrane.

To this end, in addition to the organic osmolyte(s), the aqueous medium should desirably further contain a polyol preservative for the cell-wall antigens, namely a preservative disaccharide or trisaccharide or a non-reducing glycoside of a polyhydroxy compound selected from sugar alcohols and other straight chain polyalcohols.

The particularly preferred preservative is the non-reducing sugar trehalose, but other compounds of use include maltose and raffinose, and maltitol, lactitol and palatinit, the sugar alcohol from isomaltulose. Saccharides are preferably non-reducing. The concentration of the polyol in the final incubation mixture may be from 1 to 20% (w/v), particularly 5 to 20% e.g. 10%. We have found that for certain cell-types, the additional presence of trehalose in the incubation mixture results in an increase in the percentage of cells able to perform their normal biological function after rehydration, compared to that achieved using organic osmolyte(s) alone. Conversely, however, we have shown that vacuum-drying of blood cells in the presence of trehalose, but in the absence of an organic osmolyte, produces a dried product that on rehydration gives only a very small percentage of cells.

The addition of polyols such as sugars and sugar alcohols appears to have additional advantages. Thus, in the presence of such a polyol, the cell structure appears to be strengthened, resulting in a higher proportion of intact cells surviving. Also the colour of the erythrocytes is preserved, seemingly with increased stability of the haemoglobin inside the cells. Further, the incubation itself is desirably effected at low temperature, typically a refrigerator temperature, e.g. about 4°C. We find that this is preferable to incubation at higher temperatures, e.g. about 37°C, since the osmolyte uptake and retention in the cell is maximised. Anti-coagulants such as EDTA may also be added to the incubation mixture.

The suspension of incubated cells is preferably dried in vacuo. Freeze drying is not essential and, indeed, it is preferred to dry in vacuo at ambient temperatures, e.g. 4 to 30°C. The drying can conveniently be effected by spreading the suspension into a thin film, for example in a rotary evaporator.

The method of reconstitution of the dried blood cells varies depending on the nature of the cell. In the case of erythrocytes, which have very delicate membranes, rehydration may be achieved using a medium hypertonic with respect to the tonicity of the cells in their normal, biologically active state (e.g. a solution of phosphate buffered saline containing glucopyranosyl sorbitol at a concentration of 40%), to give an aqueous suspension of the reconstituted cells. The rehydration medium may advantageously include potassium ions. A particularly preferred rehydration medium comprises a phosphate buffered saline containing K⁺ ions and an osmolyte, especially carnitine, at about 5 to 25 g/ℓ, and polyethylene glycol (preferred MW approx 10,000) at about 50 to 70 g/ℓ. The reconstituted cells may then be brought to tonicity over a period of time by gradual dilution of the mixture. Platelets, however, are much smaller cells with tougher membranes, and rehydration may be achieved by the addition of water to the same volume as before drying.

Erythrocytes incubated in the presence of proline and trehalose before drying may be reconstituted to give up to 98% apparently intact cells by microscopic examination.

Platelets incubated in the presence of osmolyte(s), optionally in the presence of a polyol such as trehalose, before drying, can be reconstituted by the addition of an equivalent volume of water to that which was present before dehydration to give an aqueous suspension of cells in which the number of biologically viable cells is sufficient for therapeutic use. Rehydration with an equivalent volume of water additionally containing 2% carnitine, however, gives results generally 25% better than with water alone. Normal platelets agglutinate when triggered by ADP and the above reconstituted cells, on incubation in the presence of ADP, also show good agglutination times.

A major problem in many therapeutic situations is that of sterility, e.g. treatment of wounded on the battlefield. It can be readily envisaged that it would be possible to devise a two-part sterile plastic container, in which the two halves were separated by a breakable seal. One half of the container would hold the dried blood product, while the other would hold the rehydrating medium. Simply breaking the seal would then enable the blood product to be reconstituted immediately whenever and wherever it was required.

The following Examples illustrate the invention further. All percentages are expressed as weight per volume, where the volume is the final volume of the mixture at the particular stage of the process being described.

### Example 1 Effect of Concentration of Organic Osmolytes on the Preservation of Erythrocytes

Whole blood was collected by venepuncture into the anticoagulant EDTA (used at a final concentration of 5mM), and then incubated for 2 hours at 37°C in one of the following osmolytes: proline, carnitine and betaine, over a range of concentrations. The samples were then frozen into a thin shell on the walls of the vessel and then placed under vacuum for drying. The vacuum was typically less than 25 µm Hg (33.3 Pa), and the samples were held under this vacuum for approxiamtely 16 hours.

The freeze-dried samples were rehydrated by resuspending some of the dry material in an hypertonic solution consisting of phosphate buffered saline (PBS) containing glucopyranosyl sorbitol at a concentration of 40%. The samples were then assesed microscopically to determine the number of intact erythrocytes.

The results are summarised in Table 1:

**Table 1**

| Organic Osmolyte | Final Concentration | % Intact Cells |
|---|---|---|
| Proline | 5 | 0 |
| | 10 | 62 |
| | 15 | 81 |
| | 20 | < 1 |
| Carnitine | 5 | 0 |
| | 10 | < 1 |
| | 15 | 75 |
| | 20 | 62 |
| Betaine | 0 | 0 |
| | 5 | 0 |
| | 10 | 35 |
| | 15 | < 5 |
| | 20 | 0 |

From the results above, freeze drying of erythrocytes in the presence of 15% proline or 15% carnitine can be seen to be particularly successful.

### Example 2 Effect of a Different Rehydration Mixture

The dry powder from the two most successfully freeze-dried erythrocyte samples in Example 1 (i.e. dehydration in the presence of 15% proline and 15% carnitine) was taken and rehydrated with solution A (10% foetal bovine serum, 2% carnitine, 7.5% polyethylene glycol [mw 6000], suspended in PBS). After the dehydrated samples were resuspended fully, an equivalent amount of PBS was added, and the integrity of the erythrocytes were assessed microscopically.

The results are as summarised in Table 2:

**Table 2**

| Sample | % Intact Cells |
|---|---|
| 15% proline | 79 |
| 15% carnitine | 87 |

### Example 3 Effect of the Additional Presence of Trehalose in the Incubation Mixture Before Freeze-Drying

Blood was collected by venepuncture into the anticoagulant EDTA (used at a final concentration of 5mM), and then incubated for 2 hours at 37°C in either 10% or 15% proline plus trehalose over a range of concentrations. The samples were then frozen into a thin shell on the walls of the vessel and then placed under vacuum for drying. Freeze-drying was then carried out as in Example 1.

The freeze-dried samples were then rehydrated by resuspending some of the dry material in solution consisting of PBS containing glucopyranosyl sorbitol at a concentration of 40%. The samples were then assessed microscopically to determine the number of intact erythrocytes.

The results are summarised in Table 3:

**Table 3**

| Final Concentration of Proline and Trehalose | % Intact Cells |
|---|---|
| 10% proline, 5% trehalose | 68 |
| 10% proline, 10% trehalose | 80 |
| 10% proline, 15% trehalose | 87 |
| 15% proline, 5% trehalose | 74 |
| 15% proline, 10% trehalose | 92 |

From these results it can be seen that up to 92% intact cells can be attained on rehydration.

### Example 4 Survival of Biologically Functional Haemoglobin Within Dried Erythrocytes

Blood was withdrawn by venepuncture into the anticoagulant EDTA (at a final concentration of 5mM) and then aliquots of the blood were incubated with the following additves:
1. 15% proline
2. 15% proline, 10% trehalose
3. 15% carnitine
4. 15% carnitine, 10% trehalose

The solutions were incubated at 37°C for 2 hours and then frozen onto the walls of a pyrex glass flask in a thin shell by first immersing the flask while rotating it, in a mixture of solid carbon dioxide and methylated spirits. After the contents had solidified onto the walls, the flask was immersed in liquid nitrogen, and then attached to a freeze drying machine so that the contents of the flask was subjected to a vacuum of less than 25 µm Hg (33.3 Pa). The blood was dried under this vacuum for at least 16 hours. When dry the blood had a crystalline appearance.

The dry blood was rehydrated with 1 volume of solution A (see Example 2), and when all the dry blood was resuspended, an equivalent volume PBS was added. The number of intact cells was assessed by fluorescein dye exclusion, the results being summarised in Table 4:

**Table 4**

| Additive Used in Drying | % Intact Cells |
|---|---|
| 15% proline | 78 |
| 15% proline, 10% trehalose | 82 |
| 15% carnitine | 70 |
| 15% carnitine, 10% trehalose | 74 |

The samples were then washed 3 times, by centrifugation and resuspension, with a solution made from mixing equivalent volumes of solution A and PBS. The cell pellet was then resuspended in 9 volumes of water to lyse the erythrocytes, and then 1 volume of 10X concentrated PBS was added.

The samples were then taken and treated as follows:
(1) gaseous oxygen was bubbled through the samples for 5 to 10 minutes, and then the absorption spectrum between 450nm and 700nm was recorded;
(2) gaseous carbon dioxide was then bubbled through the sample for 5 to 10 minutes, and then the absorption spectrum between 450nm and 700nm was recorded;
(3) gaseous oxygen was then bubbled through the samples for 5 to 10 minutes, and then the absorption spectrum between 450nm and 700nm was recorded.

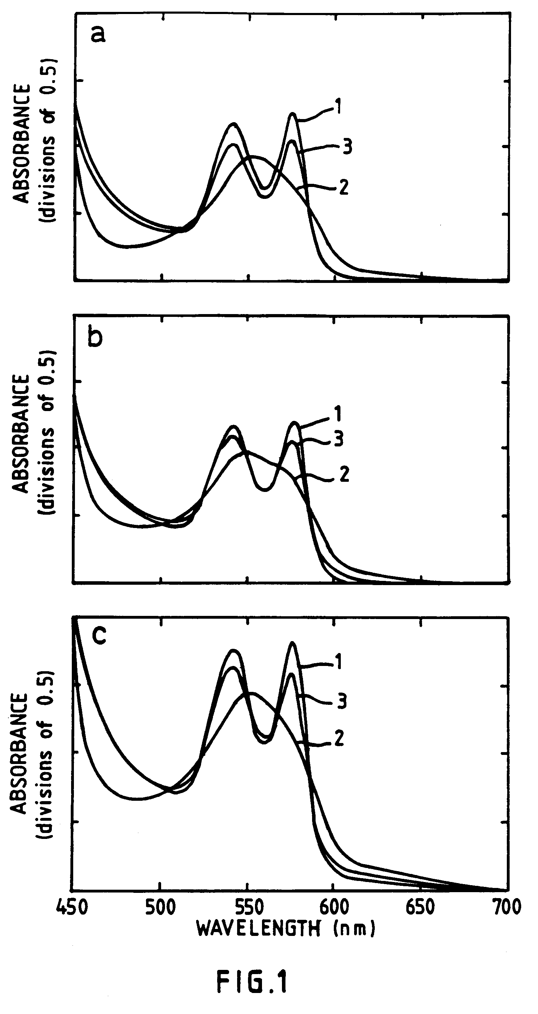

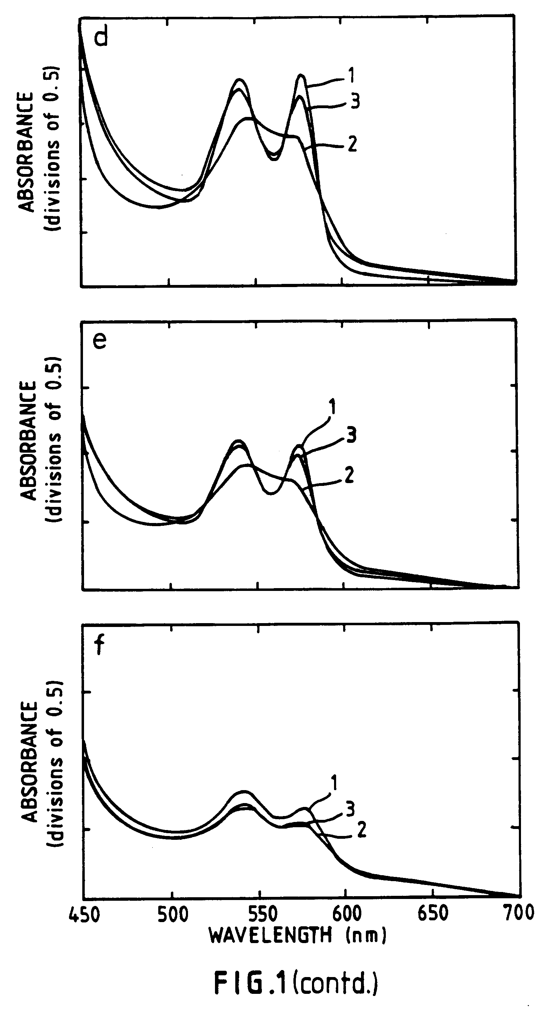

The spectra from this experiment are as shown in Figures 1(a) to 1(f) of the accompanying drawings, the samples whose spectra are shown being as follows:
(a) Normal undried blood, which was washed by centrifugation and resuspension in PBS. The cell pellet was resuspended in 9 volumes of water to lyse the erythrocytes, and 1 volume of 10 times concentrated PBS was added.
(b) Erythrocytes dried in 15% proline and subsequently rehydrated.
(c) Erythrocytes dried in 15% proline and 10% trehalose and subsequently rehydrated.
(d) Erythrocytes dried in 15% carnitine and subsequently rehydrated.
(e) Erythrocytes dried in 15% carnitine and 10% trehalose and subsequently rehydrated.
(f) Erythrocytes dried without additions and subsequently resuspended in phosphate buffered saline.

On each sample the absorbtion spectra are labelled 1, 2 and 3:
1. Spectrum following initial pulse with oxygen.
2. Spectrum following pulse with carbon dioxide.
3. Spectrum following final pulse with oxygen.

It is clear from these results that the ability of the intracellular haemoglobin to function in reversibly combining with oxygen or carbon dioxide, (as shown by the changes in the absorbtion spectrum), is substantially wholly preserved provided that the blood was incubated in the presence of an organic osmolyte before freeze drying. Of the incubation mixtures tested above, the best preservation of both cell number and haemoglobin function would appear to be with 15% proline and 10% trehalose.

### Example 5 Freeze-Drying of Platelets

Blood was collected into the anti-coagulant, acid-citrate-dextrose, and the mixture then centrifuged at approximately 1100 x g for three minutes to harvest Platelet Rich Plasma.

Aliquots of the Platelet Rich Plasma were then incubated in the presence of varying concentrations of proline, carnitine and trehalose on their own, and proline and carnitine in combination with trehalose, as well as a test sample in 7.5% NaCl. All samples were incubated for 37°C for 2 hours on a slowly moving rotary mixer, before freezing and drying.

The dehydrated samples were rehydrated with either 1 volume of water, or 1 volume of water containing 2% carnitine. It was found that for those platelets incubated in the presence of carnitine or proline, or either of these osmolytes combined with trehalose, the percentage of whole platelets recovered was between 60 and 95%. The best results were achieved with 15 % proline + 5% trehalose, and 15% carnitine + 10% trehalose. Platelets incubated in the presence of trehalose alone showed almost exclusively 'ghost' platelets when reconstituted. Results obtained when rehydrating with water in the presence of 2% carnitine were generally about 25% better than those achieved with water alone.

### Example 6 Aggregation Properties of Reconstituted Platelets

Platelet-rich plasma (PRP) was obtained by collecting blood into citrate buffer and centrifuging, e.g. at approximately 1100 x g for 3 minutes, to give a supernatant containing platelets and a precipitate containing other cells. A sample was freeze-dried in the presence of 15% w/v proline 10% w/v trehalose 10% carnitine and 5% glucose and subsequently rehydrated to its original volume with water and subjected to aggregation by addition of ADP (a 1 mg/10 ml stock solution) at a dilution of 1:10. The results were compared with those for fresh PRP by measuring optical density changes. A significant degree of aggregation was noted.

### Example 7

### 1. Collection and Dehydration

Fresh blood was withdrawn by venepuncture from healthy volunteers into the anti-coagulant EDTA (final concentration 5mM). The blood was centifuged and then washed 3 to 4 times in a potassium free buffered salt solution which contains the following ingredients:

**Table 5**

| Compound | Amount (g/l) |
|---|---|
| NaCl | 8.12 |
| Na₂HPO₄.12H₂0 | 3.6 |
| NaH₂PO₄.2H₂O | 0.8 |
| MgSO₄.7H₂0 | 0.2 |
| CaCl₂.2H₂0 | 0.15 |
| Proline | 150 |
| Trehalose | 100 |

The cells were then resuspended finally at 50% and incubated for 60 minutes at 4°C, and aliquots were then dried at ambient temperature (evaporation cooled the samples) under a vacuum of less than 5 x 10⁻² mbar (50 Pa) for approximately 16 hours. At this stage the material is very crisp and can be powdered easily.

### 2. Rehydration

Rehydration of the blood was accomplished using 2 solutions, the contents of which are listed in the following Tables.

### Solution 1

**Table 6**

| Compound | Amount(g/l) |
|---|---|
| NaCl | 8.0 |
| KCl | 0.4 |
| Na₂HPO₄.12H₂0 | 3.6 |
| NaH₂PO₄2H₂0) | 0.8 |
| Glucose | 2 |
| Casein Hydrolysate¹ | 10 |
| Carnitine | 20 |
| PEG² | 60 |

### Solution 2

**Table 7**

| Compound | Amount (g/l) |
|---|---|
| NaCl | 8.0 |
| KCl | 0.4 |
| Na₂HPO₄.12H₂0 | 3.6 |
| NaH₂PO₄.2H₂0 | 0.8 |
| Glucose | 2 |
| Casein Hydrolysate¹ | 5 |
| Carnitine | 10 |
| PEG² | 30 |

| | |
|---|---|
| 1. NZ-Amine Types AS Enzymic Digest of Casein, High Solubility (Morham Ltd, East Sussex). | |
| 2. Polyethylene Glycol (MW 10,000) | |

The red cells were dried in aliquots of 250µl and the rehydration was inititated by the addition of 250µl of solution 1 to the dry aliquots. The cells were allowed to rehydrate slowly, and when in solution, 500µl of solution 2 was added. At this stage the cells were viewed under the microscope and the number of apparently intact cells was counted. A further 1 ml of solution 2 was then added and the cells were then centrifuged at 5,220 x g for 5 minutes. The supernatant was removed and the cells were resuspended in solution 2. For typing the red cell antigenic status, an equal volume of the red cells in solution 2 was added to an equal volume of an antibody mixed 1 : 1 with solution 1. The normal times of protocols for typing with each antibody was then followed, and the results were scored according to "Reading and Grading of Hemagglutination Reactions' (Ortho Blood Bank Educational Series). The results are shown in Table 8.

**Table 8**

| Erthrocytes phenotyped as AR¹rNNK₁ ⁻Fy^{a-b+} were dried and their antigenic status was tested after storage at room temperature for: | | | | | |
|---|---|---|---|---|---|
| Antibody versus blood group | Fresh blood | 1 day | 2 weeks | 1 month | 2 months |
| A | 4+ | 4+ | 4+ | 4+ | 4+ |
| B | - | - | - | - | - |
| Rh D | 3+ | 3+ | 3+ | 3+ | 3+ |
| Rh c | 2+ | 2+ | 2+ | 2+ | 2+ |
| Kell | - | - | - | - | - |
| M | - | - | - | - | - |
| N | 3+ | 4+ | 4+ | 4+ | 4+ |
| Duffy (Fy^{b}) | 2+ | + | 2+ | 2+ | 2+ |
| % of apparently intact cells | >98% | >98% | >98% | >98% | >98% |

### Example 8 Effect of different sugars and sugar alcohols on storage.

A series of dried samples were prepared in a method similar to that in Example 7 but in which the sugar component of the washing and incubation media used prior to dehydration was varied. The concentration of each sugar used was 10% (w/v). The blood was dried in aliquots of 250µl under a vacuum as in Example 7 and then stored at room temperature in a plastic bag with a crimped strip seal, in the presence of a pouch of desiccant. After 3 months the cells were rehydrated according to the protocol described in Example 7 and then tested to determine their antigenic profile.

The results are shown in Table 9 below. It would appear from these results that the integrity of the cell in the dry state and on rehydration can be maintained by the osmoprotectant, proline, alone. However there are three important points to note, the first is that where proline was used as the sole protective agent there appeared to be some deterioration in the sample. On rehydration the samples which contained proline alone were brown/black in colour which would indicate that the cell and/or its contents may have undergone degeneration possible due to some form of reduction reaction. However in the presence of trehalose, maltose, maltitol,

**TABLE 9**

| Results of rehydration of red cells dried in different sugars and stored at room temeerature for 3 months | | | | | | | |
|---|---|---|---|---|---|---|---|
| Proline plus the following sugars | Colour on rehydration | % apparently intact cells | Agglutination patterns with antibodies against | | | | |
| | | | A | B | RhD | Rhc | Kell |
| No SUGAR | Brown/black | 67% | 4+ | - | 4+ | + | - |
| SORBITOL | Brown | 15% | 4+ | - | 4+ | + | - |
| MALTOSE | Red | 80% | 4+ | - | 4+ | 2+ | - |
| TREHALOSE | Red | 74% | 4+ | - | 4+ | 2+ | - |
| MALTITOL | Red | 82% | 4+ | - | 4+ | 2+ | - |
| LACTITOL | Red | 86% | 4+ | - | 4+ | 2+ | - |
| PALATINIT | Red | 94% | 4+ | - | 4+ | 2+ | - |
| RAFFINOSE | Red | 90% | 4+ | - | 4+ | + | - |

lactitol palatinit or raffinose, the samples appeared to be the normal bright red colour.

The second point is that in the absence of a sugar there appears to be a loss of antigenicity, which is apparent as a reduction in the amount of agglutination seen with anti-Rhesus c antibody. Thus over this storage period many sugars appear to work effectively at preserving the antigenicity of the cells and their integrity.

The third point is that the sugar alcohols appear to help stabilize the cell structure itself, as evidenced by the percentage of intact cells obtained.

### Example 9 Quantitation of mean cell haemoglobin levels

### a) Collection and drying of blood.

Blood was taken from a volunteer by venepuncture into the anticoagulant EDTA (final concentration 5mM). A sample of this blood was taken, centrifuged, and washed in potassium free balanced salt solution (as in Table 5) then incubated at 4°C for 60 minutes in potassium free balanced salt solution supplemented with 10% trehalose and 15% proline. The blood was then dried in aliquots of 250µl under a vacuum of less than 8 x 10⁻² mbar (80 Pa) for more than 16 hours.

### b) Rehydration of blood

The cells were rehydrated using 2 solutions. Solution 1 as in the following Table, and solution 2 as in Example 8.

| Compound | Amount per litre |
|---|---|
| KCl | 10.4g |
| ZnSO₄7H₂0 | 8mg |
| Vitamin C | 7mg |
| MgCl₂.6H₂0 | 418mg |
| CuSO₄.5H₂0 | 4mg |
| Calcium lactate | 218mg |
| Tris buffer pH7.2 | 10mM |
| Casein Hydrolysate¹ | 10g |
| Carnitine | 20g |
| PEG² | 75g |

| | |
|---|---|
| 1 and 2 : As in Example 8 | |

The red cells were dried in aliquots of 250µl and the rehydration was initiated by the addition of 250µl of solution 1 to the dry aliquots. The cells were allowed to rehydrate slowly, and when completely in suspension, a further 500µl of solution 2 was added. To this was added an additional 1ml of solution 2 and the cells were then centrifuged at 5,220 x g for 5 minutes.

The supernatant was removed and the cells were resuspended in solution 2 and counted. c) Release of haemoglobin and its measurement.

The method used for the release of haemoglobin and its measurement was the same irrespective of whether the sample was fresh blood or rehydrated blood. For fresh blood the blood was resuspended in phosphate buffered saline, counted and centrifuged at 1,310 x g for 10 minutes. The cells were then lysed to release the haemoglobin. For the rehydrated blood in solution 2, the cells were centrifuged at 5,220 x g for 5 minutes and then lysed to release their haemoglobin.

The cells were lysed by resuspension in 1ml of deionised, distilled water. The samples were then agitated after which 250µl of carbon tetrachloride was added and the solution was vortexed and centrifuged at 16,000 x g for 10 minutes. The free haemoglobin in the supernatant was determined spectroscopically.

### Results:

| Sample | MCHb¹(pg/cell)± SD (n) | % of fresh control |
|---|---|---|
| Fresh erythrocytes | 27.75 ± 5.46 (n=4) | 100% |
| Erythrocytes incubated in trehalose and proline, dried and rehydrated | 16.87 ± 3.26 (n=4) | 61% |

| | | |
|---|---|---|
| 1. Mean cell haemoglobin level | | |

Results from a similar experiment, this time replacing the trehalose with other sugar alcohols:

| Sample | MCHb(pg/cell) ± SD | % of fresh control |
|---|---|---|
| Fresh erythrocytes | 30.43 ± 3.9 (n=4) | 100% |
| Erythrocytes incubated in glucopyranosyl mannitol and proline, dried and rehydrated | 18.68 ± 9.94 (n=6) | 61% |
| Erythrocytes incubated in glucopyranosyl sorbitol and proline, dried and rehydrated. | 24.40 ± 3.34 (n=4) | 80% |

### Example 10 Experiment to show that haemoglobin from red cells stored on the bench for 2 months can reversible bind oxygen and carbon dioxide.

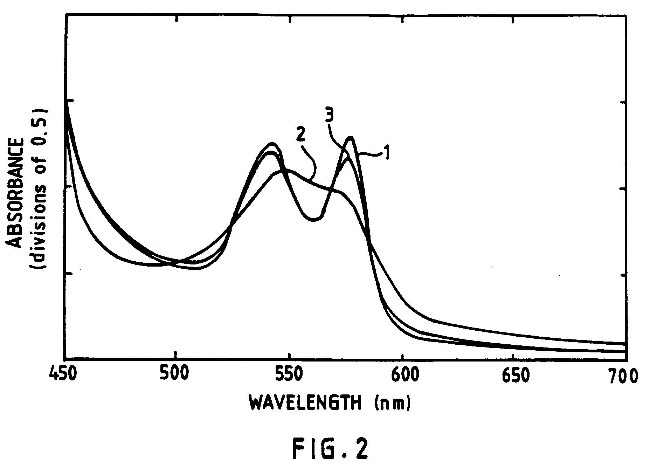

The red cells were collected and dried in a manner similar to that described in Example 7. The dried red cells were stored at room temperature in a ziplock bag containing pouches of desiccant. The samples were rehydrated approximately 2 months later in a manner similar to that described in Example 7. The red cells were then lysed with distilled water to release the intracellular haemoglobin. One volume of ten times concentrated phosphate buffered saline was added to 9 volumes of haemoglobin in distilled water, and the samples were then treated as follows:
(i) the spectrum of the sample was read over the range 450nm to 700nm.
(ii) oxygen was then bubbled through the sample for approximately 5 minutes, and the spectrum was read over the range 450nm to 700nm (Figure 2, line 1).
(iii) carbon dioxide was then bubbled through the sample for about 5 minutes, and the spectrum again read over the same range (Figure 2, line 2).
(iv) oxygen was then bubbled through the same for approximately 5 minutes and the spectrum again read over the same range (Figure 2, line 3).

The changes in the spectrum of the haemoglobin from the sample are substantially similar to that seen with haemoglobin from fresh red cells shown in Example 4.

## Claims

1. A method of drying blood cells for rehydration, characterised in that the cells to be dried are incubated in an aqueous system containing one or more organic osmolytes before drying.

2. A method according to Claim 1, in which the organic osmolytes have a molecular weight from 80 to 180 and are selected from amino acids and amino acid derivatives.

3. A method according to Claim 1, in which the organic osmolytes are represented by the formula 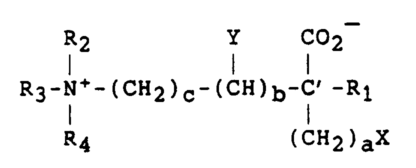 where a, b and c are each integers from 0 to 4; X is H, alkyl or NH₂; Y is H, alkyl, or OH; R₁ and R₂ are each H or C₁-C₄ alkyl, or R₁ and R₂ together with N⁺ and C' form a heterocyclic ring, e.g. a pyrrolidine ring; and R₃ and R₄ are each H or C₁-C₄ alkyl.

4. A method according to Claim 3, in which the organic osmolytes are selected from proline; carnitine; and betaine.

5. A method according to any of Claims 1 to 4, in which the amount of the organic osmolyte(s) in the incubation mixture is from 2 to 25% (w/v).

6. A method according to Claim 5, in which the amount of the organic osmolyte(s) in the incubation mixture is from 10 to 20%(w/v).

7. A method according to Claim 5 or Claim 6, in which the organic osmolyte is proline or carnitine, and is present in the incubation mixture at about 15% (w/v).

8. A method according to any of Claims 1 to 7, in which the incubation mixture additionally contains a preservative polyol chosen from a preservative di- or tri- saccharide or a non-reducing glycoside of a poly hydroxy compound selected from sugar alcohols and other straight chain polyols.

9. A method according to Claim 8, in which the amount of polyol in the incubation mixture is from 1 to 20% (w/v).

10. A method according to any of Claim 8 or Claim 9, in which the polyol is trehalose.

11. A method according to any of Claims 1 to 10, in which the incubation is effected at low temperature.

12. A method according to any of Claims 1 to 11, in which the incubation mixture additionally contains an anti-coagulant.

13. A method according to Claim 10, in which the amount of trehalose in the incubation mixture is 10% (w/v) and the amount of proline or carnitine is 15% (w/v).

14. A method according to any of Claims 1 to 13, in which dried erythrocytes are rehydrated with a medium hypertonic to the tonicity of the erythrocytes in their normal, biologically active state.

15. A method according to Claim 14, in which the rehydration is carried out with a phosphate buffered saline solution containing K⁺ions, an osmolyte at 5 to 25 g/ℓ and polyethylene glycol (MW 10,000) at 50 to 70 g/ℓ.

16. A method according to any of Claims 1 to 13, in which dried platelets are rehydrated by the addition of an equivalent amount of water to that which was present before dehydration.

17. Dried blood cells for rehydration, characterised in that the blood cells have been dried by a method according to any of Claims 1 to 15.

18. Blood cells, characterised in that the cells have been dried and subsequently rehydrated by a method according to any of Claims 1 to 16.

19. Blood cells according to Claim 18, in which the blood cells are erythrocytes.

20. Erythrocytes according to Claim 19, in which greater than 75% of the cells are intact.

21. Erythrocytes according to Claim 20, in which up to 98% of the rehydrated cells are intact.

22. Blood cells according to Claim 18, in which the blood cells are platelets.

23. A rehydrated blood product obtained by rehydrating dried blood products according to Claim 17.

## Patentansprüche

1. Verfahren zum Entwässern von Blutzellen zur Wiederbefeuchtung bzw. Rehydration, dadurch gekennzeichnet, daß die zu entwässernden Zellen vor dem Entwässern in einem wäßrigen System inkubiert werden, das einen oder mehrere organische Osmolyten enthält.

2. Verfahren nach Anspruch 1, wobei die organischen Osmolyten ein Molekulargewicht von 80 bis 180 haben und unter Aminosäuren und Aminosäurederivaten ausgewählt sind.

3. Verfahren nach Anspruch 1, wobei die organischen Osmolyten durch die Formel: 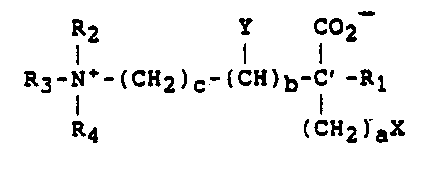 darstellbar sind, wobei a, b und c jeweils ganze Zahlen von 0 bis 4 bedeuten; X gleich H, ein Alkyl oder NH₂ ist; Y gleich H, ein Alkyl oder OH ist; R₁ und R₂ jeweils gleich H oder ein C₁-C₄-Alkyl sind, oder R₁ und R₂ zusammen mit N⁺ und C' einen heterocyclischen Ring bilden, z.B. einen Pyrrolidinring; und R₃ und R₄ jeweils gleich H oder ein C₁-C₄-Alkyl sind.

4. Verfahren nach Anspruch 3, wobei die organischen Osmolyten unter Prolin, Carnitin und Betain ausgewählt sind.

5. Verfahren nach einem der Ansprüche 1 bis 4, wobei der Anteil des (der) organischen Osmolyten im Inkubationsgemisch 2 bis 25% (Gew./Vol.) beträgt.

6. Verfahren nach Anspruch 5, wobei der Anteil des (der) organischen Osmolyten im Inkubationsgemisch 10 bis 20% (Gew./Vol.) beträgt.

7. Verfahren nach Anspruch 5 oder Anspruch 6, wobei der organische Osmolyt Prolin oder Carnitin ist und in dem Inkubationsgemisch in einem Anteil von etwa 15% (Gew./Vol.) enthalten ist.

8. Verfahren nach einem der Ansprüche 1 bis 7, wobei das Inkubationsgemisch zusätzlich ein konservierendes Polyol enthält, das unter einem konservierenden Di- oder Trisaccharid oder einem nichtreduzierenden Glycosid einer Polyhydroxyverbindung ausgewählt ist, die unter Zuckeralkoholen und anderen geradkettigen Polyolen ausgewählt wird.

9. Verfahren nach Anspruch 8, wobei der Anteil des Polyols im Inkubationsgemisch 1 bis 20% (Gew./Vol.) beträgt.

10. Verfahren nach einem der Ansprüche 8 oder 9, wobei das Polyol Trehalose ist.

11. Verfahren nach einem der Ansprüche 1 bis 10, wobei die Inkubation bei niedriger Temperatur erfolgt.

12. Verfahren nach einem der Ansprüche 1 bis 11, wobei das Inkubationsgemisch zusätzlich ein Antikoagulans bzw. gerinnungshemmendes Mittel enthält.

13. Verfahren nach Anspruch 10, wobei der Trehalose-Anteil im Inkubationsgemisch 10% (Gew./Vol.) und der Prolin- oder Carnitin-Anteil 15% (Gew./Vol.) beträgt.

14. Verfahren nach einem der Ansprüche 1 bis 13, wobei entwässerte Erythrozyten mit einem Medium rehydriert werden, das bezüglich der Tonizität der Erythrozyten in ihrem normalen, biologisch aktiven Zustand hypertonisch ist.

15. Verfahren nach Anspruch 14, wobei die Rehydration mit einer phosphatgepufferten Salzlösung ausgeführt wird, die K⁺-Ionen. 5 bis 25 g/l eines Osmolyten und 50 bis 70 g/l Polyethylenglycol (Molekulargewicht 10000) enthält.

16. Verfahren nach einem der Ansprüche 1 bis 13, wobei entwässerte Thrombozyten durch Zugabe eines Wasseranteils rehydriert werden, der dem vor der Entwässerung vorhandenen Anteil äquivalent ist.

17. Entwässerte Blutzellen zur Rehydration, dadurch gekennzeichnet, daß die Blutzellen durch ein Verfahren nach einem der Ansprüche 1 bis 15 entwässert worden sind.

18. Blutzellen, dadurch gekennzeichnet, daß die Zellen durch ein Verfahren nach einem der Ansprüche 1 bis 16 entwässert und später rehydriert worden sind.

19. Blutzellen nach Anspruch 18, wobei die Blutzellen Erythrozyten sind.

20. Erythrozyten nach Anspruch 19, wobei mehr als 75% der Zellen intakt sind.

21. Erythrozyten nach Anspruch 20, wobei bis zu 98% der rehydrierten Zellen intakt sind.

22. Blutzellen nach Anspruch 18, wobei die Blutzellen Thrombozyten sind.

23. Rehydriertes Blutprodukt, das durch Rehydration entwässerter Blutprodukte nach Anspruch 17 gewonnen wird.

## Revendications

1. Procédé de déshydratation de cellules sanguines, à réhydrater, caractérisé en ce que les cellules à déshydrater sont incubées dans un système aqueux contenant un ou plusieurs osmolytes organiques avant la déshydratation.

2. Procédé selon la revendication 1, dans lequel les osmolytes organiques ont un poids moléculaire de 80 à 180 et sont choisis parmi les acides aminés et les dérivés des acides aminés.

3. Procédé selon la revendication 1, dans lequel les osmolytes organiques sont représentés par la formule 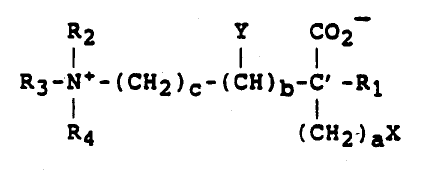 dans laquelle a, b et c sont chacun des nombres entiers de 0 à 4 ; X est H, un alkyle ou NH₂; Y est H, un alkyle, ou OH; R₁ et R₂ sont chacun H ou un alkyle en C₁ à C₄, ou bien R₁ et R₂, avec N⁺ et C', forment un cycle hétérocyclique, par exemple un cycle pyrrolidine; et R₃ et R₄ sont chacun H ou un alkyle en C₁ à C₄.

4. Procédé selon la revendication 3, dans lequel les osmolytes organiques sont choisis parmi la proline; la carnitine; et la bétaïne.

5. Procédé selon l'une quelconque des revendications 1 à 4, dans lequel la quantité d'osmolyte(s) organique(s) dans le mélange d'incubation est de 2 à 25% (p/v).

6. Procédé selon la revendication 5, dans lequel la quantité d'osmolyte(s) organique(s) dans le mélange d'incubation est de 10 à 20% (p/v).

7. Procédé selon la revendication 5 ou la revendication 6, dans lequel l'osmolyte organique est la proline ou la carnitine, et est présent dans le mélange d'incubation à environ 15% (p/v).

8. Procédé selon l'une quelconque des revendications 1 à 7, dans lequel le mélange d'incubation contient en plus un polyol conservateur choisi parmi un di- ou tri-saccharide conservateur, ou un glycoside non réducteur d'un composé polyhydroxylé choisi parmi les alcools de sucre et d'autres polyols à chaîne linéaire.

9. Procédé selon la revendication 8, dans lequel la quantité de polyol dans le mélange d'incubation est de 1 à 20% (p/v).

10. Procédé selon l'une quelconque de la revendication 8 ou de la revendication 9, dans lequel le polyol est le tréhalose.

11. Procédé selon l'une quelconque des revendications 1 à 10, dans lequel l'incubation est effectuée à basse température.

12. Procédé selon l'une quelconque des revendications 1 à 11, dans lequel le mélange d'incubation contient en plus un anticoagulant.

13. Procedé selon la revendication 10, dans lequel la quantité de tréhalose dans le mélange d'incubation est de 10% (p/v) et la quantité de proline ou de carnitine est de 15% (p/v).

14. Procédé selon l'une quelconque des revendications 1 à 13, dans lequel des érythrocytes déshydratés sont réhydratés avec un milieu hypertonique par rapport à la tonicité des érythrocytes à leur état biologiquement actif normal.

15. Procédé selon la revendication 14, dans lequel la réhydratation est effectuée avec une solution saline de tampon phosphate contenant des ions K⁺, un osmolyte de 5 à 25 g/l et du polyéthylèneglycol (poids moléculaire 10 000) de 50 à 70 g/l.

16. Procédé selon l'une quelconque des revendications 1 à 13, dans lequel des plaquettes déshydratées sont réhydratées par l'addition d'une quantité d'eau équivalant à celle qui était présente avant la déshydratation.

17. Cellules sanguines déshydratées, à réhydrater, caractérisées en ce que les cellules sanguines ont été déshydratées par un procédé selon l'une quelconque des revendications 1 à 15.

18. Cellules sanguines, caractérisées en ce que les cellules ont été déshydratées puis réhydratées par un procédé sel on l'une quel conque des revendications 1 à 16.

19. Cellules sanguines selon la revendication 18, les cellules sanguines étant des érythrocytes.

20. Érythrocytes selon la revendication 19, dans lesquels plus de 75% des cellules sont intactes.

21. Érythrocytes selon la revendication 20, dans lesquels jusqu'à 98% des cellules réhydratées sont intactes.

22. Cellules sanguines selon la revendication 18, les cellules sanguines étant des plaquettes.

23. Produit sanguin réhydraté obtenu en réhydratant des produits sanguins déshydratés selon la revendication 17.
